## Europäisches Patentamt
## European Patent Office
## Office européen des brevets

(19)

(11) Numéro de publication: **0 038 740**
**B1**

(12)

# FASCICULE DE BREVET EUROPEEN

(45) Date de publication du fascicule du brevet:
**21.09.83**

(51) Int. Cl.³: **B 22 D 31/00,** B 23 D 31/04

(21) Numéro de dépôt: **81400566.6**

(22) Date de dépôt: **09.04.81**

(54) **Machine à scier les masselottes de pièces de fonderie.**

(30) Priorité: **18.04.80 FR 8008740**

(43) Date de publication de la demande:
**28.10.81 Bulletin 81/43**

(45) Mention de la délivrance du brevet:
**21.09.83 Bulletin 83/38**

(84) Etats contractants désignés:
**BE CH DE GB IT LI SE**

(56) Documents cités:
**FR-A-2 050 454**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Steydle, Guy, 4, rue René-Boulanger,
F-92350 Le Plessis Robinson (FR)**

(74) Mandataire: **Srour, Elie et al, 8 & 10 Avenue Emile Zola,
F-92109 Boulogne Billancourt (FR)**

ACTORUM AG

Machine à scier les masselottes de pièces de fonderie

La présente invention est du domaine du sciage des masselottes des pièces de fonderie du type piston. Elle vise plus précisément une machine de conception plus simple et permettant de réaliser ces opérations sur n'importe quel type de pistons, et ce uniquement en changeant les supports de manutention, en réglant l'écartement des scies ou des meules et en adaptant la programmation des unités de sciage ou de tronçonnage en fonction du gabarit des pièces à traiter.

La machine à scier les masselottes de piston selon la présente invention est pourvue d'au moins une unité de sciage ou de tronçonnage coopérant avec au moins une unité de bridage pour le blocage des pièces à démasselotter, ainsi qu'un dispositif extracteur des pièces démasselottées, cette machine étant caractérisée par le fait qu'elle comporte au droit du bâti de machine un portique en L constitué de deux bras ou potences définissant à leur jonction à angle droit une zone au droit de laquelle est monté pivotant l'axe ou arbre d'un carrousel ou dispositif de transfert rotatif intermittent des pistons d'un poste de travail au poste voisin ou au dispositif extracteur.

En outre, des vérins commandant les unités de bridage des pièces pendant le sciage sont montés au droit des bras constituant le portique en L.

Sur le plateau ou table de ce carrousel sont montés des bras rayonnants destinés à supporter les dispositifs recevant les pièces à démasselotter et sollicités vers le haut par des moyens élastiques prenant appui sur la table de carrousel.

D'autres caractéristiques et détails de l'invention apparaîtront à la lecture de la description suivante d'une forme de réalisation de machine à scier les masselottes, plus précisément destinée à l'usinage des pistons, en référence aux dessins annexés dans lesquels:

– la figure 1 est une vue schématique latérale de la machine à scier les masselottes selon l'invention, et

– la figure 2 est une vue schématique de dessus de la machine de la figure 1.

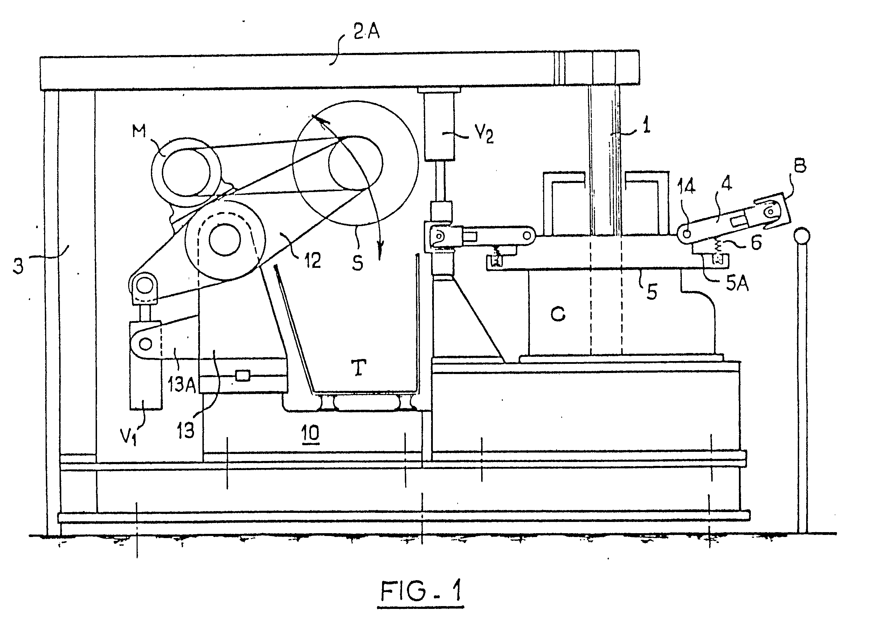

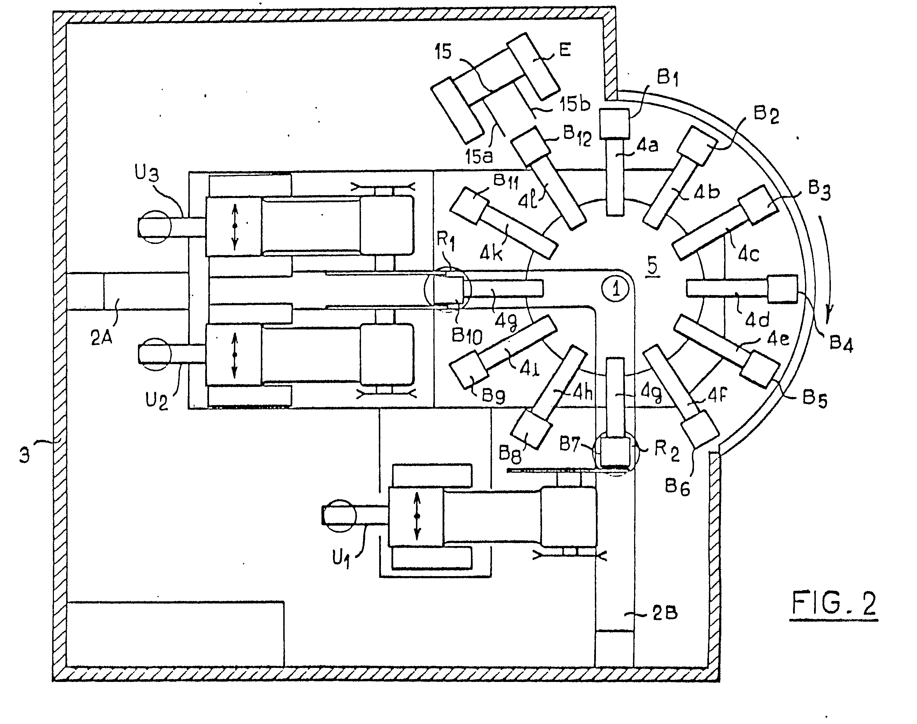

Dans la forme de réalisation des figures 1 et 2, la machine à scier les masselottes selon l'invention est essentiellement constituée d'un dispositif de transfert rotatif intermittent à plusieurs postes de travail des pistons ou carrousel C, de trois unités de sciage ou de tronçonnage oscillantes ou à déplacement rectiligne $U_1$, $U_2$, $U_3$, d'un extracteur E des pièces démasselottées, de dispositifs d'évacuation des copeaux et masselottes T et de deux dispositifs de bridage des pièces $R_1$, $R_2$.

La machine à scier les masselottes selon l'invention comporte un bâti 3 sur lequel s'appuient perpendiculairement deux potences ou bras 2A, 2B définissant à leur jonction à angle droit une zone où est monté perpendiculairement et de façon pivotante l'axe ou arbre 1, entraînant la table ou plateau 5 du carrousel C. Sur ce plateau 5 sont disposés des bras rayonnants 4a... 4n sur lesquels sont fixés les outillages supports de pistons $B_1$... $B_n$, respectivement. Chaque bras 4 est monté pivotant en 14 dans la zone supérieure d'un épaulement périphérique 5A du plateau 5 et est sollicité en position inclinée vers le haut par des moyens élastiques, par exemple des ressorts 6 logés dans ledit épaulement périphérique 5A de façon que lors de l'évolution du carrousel C les pistons passent au-dessus des vés inférieurs des dispositifs de bridage, lesdits vés étant fixés sur le bâti de la machine en des zones situées au droit des unités de sciage ou de tronçonnage.

Sur les branches 2A et 2B du portique en forme de L sont respectivement montés des vérins $V_2$, pneumatiques, hydrauliques ou électriques destinés à venir appliquer sur les pistons les vés de bridage supérieur afin de les maintenir bridés au poste où opèrent les unités de sciage et de tronçonnage.

Une fois le travail de sciage ou de tronçonnage accompli, les vérins $V_2$ remontent les vés de bridage supérieurs, libérant ainsi les pistons sciés ou tronçonnés. Sous l'effet des moyens élastiques 6 sollicitant les bras rayonnants 4 vers le haut, les pistons débridés remontent en position inclinée. On peut alors procéder à une rotation du carrousel transférant un autre piston audit poste de travail. Chaque piston dûment tronçonné ou scié est transféré au poste d'extraction E. Ce dernier est constitué d'une fourchette 15 dont les deux branches 15a, 15b se prolongent de part et d'autre du bras rayonnant duquel il faut déchausser le piston de son support B. Cette fourchette est animée d'un mouvement rotatif autour d'un axe horizontal de bas en haut et entraîne le piston déchaussé dans une goulotte d'évacuation.

Les dispositifs d'évacuation T des copeaux et masselottes peuvent être constitués de couloirs vibrants et/ou oscillants ou de tapis convoyeurs. Par ailleurs, chaque unité de sciage ou de tronçonnage $U_1$, $U_2$, $U_3$ peut être constituée d'une scie S actionnée par un moteur M et montée à une extrémité d'un balancier 2, articulé sur un support 13 solidaire de l'embase 10 de la machine, tandis qu'à l'autre extrémité du balancier 12 est articulée la tige d'un vérin $V_1$ dont le corps est monté pivotant sur une patte 13A du support 13. Le cycle de travail des vérins $V_1$ et $V_2$, de l'extracteur E et des scies ou meules est programmé à l'avance en fonction du travail de démasselottage à effectuer sur les pièces.

En outre, l'aménagement des différents postes de cette machine permettra d'imaginer facilement la construction d'une cabine d'insonorisation et de protection contre les projections éventuelles de masselottes, ce qui sera un avantage du point de vue des conditions de travail. De plus, l'opération de chargement se trouvera située à l'opposé des postes de travail et, du fait que le dispositif de transfert rotatif ou carrousel est intermittent et que plusieurs postes de chargement sont disponibles, les conditions de travail n'en seront qu'améliorées.

**Revendications**

1. Machine à scier les masselottes de pièces de fonderie, par exemple celles du type piston, dans laquelle est prévue au moins une unité de sciage ou de tronçonnage coopérant avec au moins une unité de bridage pour le blocage des pièces à démasselotter, ainsi qu'un dispositif extracteur des pièces démasselottées, cette machine étant caractérisée par le fait qu'elle comporte un portique en L constitué de deux bras ou potences (2A, 2B) perpendiculaires au bâti (3) de machine et définissant à leur jonction à angle droit une zone où est monté perpendiculairement et de façon pivotante l'axe (1) ou arbre d'un carrousel ou dispositif de transfert rotatif (C) intermittent des pistons d'un poste de travail au poste voisin ou au dispositif extracteur.

2. Machine selon la revendication 1, caractérisé par le fait que des vérins (V₂) commandant les unités de bridage des pièces pendant le sciage sont montés perpendiculairement aux bras (2A, 2B) constituant le portique en L.

3. Machine selon la revendication 1 ou 2, caractérisé par le fait que sur le plateau (5) dudit carrousel sont montés des bras (4) rayonnants destinés à supporter les dispositifs recevant les pièces à démasselotter et sollicités vers le haut par des moyens élastiques (6) prenant appui sur ledit plateau.


**Patentansprüche**

1. Maschine zum Absägen von Gussansätzen von Gussteilen, insbesondere von kolbenförmigen Gussteilen, die wenigstens eine Säge- bzw. Trenneinrichtung aufweist, die mit wenigstens einer die von den Gussansätzen zu befreienden Gussteile festlegenden Halteeinrichtung zusammenwirkt, sowie eine Ausziehvorrichtung zum ausziehen der von den Gussansätzen befreiten Gussteile, dadurch gekennzeichnet, dass sie ein L-förmiges Joch mit zwei rechtwinklig zum Maschinengestell (3) angeordneten Tragarmen (2A, 2B) besitzt, welche an ihrer rechtwinkligen Verbindungsstelle einen Bereich definieren, in dem die Achse (1) oder Welle einer Dreheinrichtung bzw. schrittweise arbeitenden Drehvorrichtung (C) zur Weitergabe der Kolben von einer Arbeitsstelle zur nächsten Fertigungsstelle oder zur Ausziehvorrichtung rechtwinklig und drehbar gelagert ist.

2. Maschine nach Anspruch 1, dadurch gekennzeichnet, dass sie Presstöpfe (V₂) aufweist, welche die die Teile während des Sägens festlegenden Halteeinrichtungen steuern und senkrecht zu den das L-förmige Joch bildenden Armen (2A, 2B) angeordnet sind.

3. Maschine nach Anspruch 1 oder 2, dadurch gekennzeichnet, dass auf dem Teller (5) der Drehvorrichtung radiale Arme (4) angeordnet sind, welche die die von den Gussansätzen zu befreienden Teile aufnehmen und durch sich auf dem Teller abstützende elastische Mittel (6) nach oben aufschlagt werden.


**Claims**

1. A machine for sawing the deadheads of moulded pieces, for example of moulded pieces of the piston type, which comprises at least one sawing or severing unit cooperating with at least one clamping unit for blocking the pieces from which the deadheads are to be removed, and an extracting device for extracting the pieces from which the deadheads have been removed characterized in that it comprises an L-shaped gantry constituted by two arms or beams (2A, 2B) perpendicular to the frame (3) of the machine and defining at their perpendicular junction a zone wherein an axis (1) or shaft of a rotating device or intermittent rotative transfer device (C) for transferring the pistons from a working station to an adjacent station or to the extracting device is perpendicularly and pivotally mounted.

2. A machine according to claim 1, characterized in that jacks (V₂) controlling the units for blocking the pieces during the sawing operation are mounted perpendicularly to the arms (2A, 2B) constituting the L-shaped gantry.

3. A machine according to claim 1 or 2, characterized in that the plate (5) of said rotating device supports radial arms (4) adapted to support the devices receiving the pieces from which the deadheads are to be removed, said arms being biased upwardly by elastic means (6) resting on said plate.

FIG - 1

FIG. 2